# EUROPEAN PATENT APPLICATION

(11) **EP 4 682 231 A1**
(43) Date of publication of application: **21.01.2026**
(21) Application number: 24770267.3
(22) Date of filing: 02.02.2024
(51) Int. Cl.: C10M 107/24, C09K 5/04, C10M 107/34, C10N 30/08, C10N 40/30

(54) **COMPOSITION FOR FREEZER**

(30) Priority: 13.03.2023 JP 2023038980
(71) Applicant: Idemitsu Kosan Co.,Ltd., Tokyo 100-8321 (JP)
(72) Inventor: MATSUMOTO Tomoya, Tokyo 100-8321 (JP)
(74) Representative: Hoffmann Eitle
(86) International application number: PCT/JP2024/003555
(87) International publication number: WO 2024/190147

(57) **Abstract**

Provided is a composition for a refrigerator, which is a mixture of a mixed refrigerant containing carbon dioxide and being a refrigerant having a low global warming potential, and a refrigerator oil, and is excellent in heat stability. The composition for a refrigerator is a composition for a refrigerator, including: a mixed refrigerant; and a refrigerator oil containing a base oil, wherein the mixed refrigerant contains a hydrofluorocarbon compound and carbon dioxide, wherein a content of the hydrofluorocarbon compound is less than 25 mass% with respect to a total amount of the mixed refrigerant, and wherein the base oil contains one or more kinds selected from the group consisting of: a polyvinyl ether; and a polyalkylene glycol.

## Description

### Technical Field

The present invention relates to a composition for a refrigerator including a mixed refrigerant and a refrigerator oil.

### Background Art

A refrigerator such as a compression-type refrigerator generally has a structure, which includes at least a compressor, a condenser, an expansion mechanism (e.g., an expansion valve), and an evaporator, and in which a mixture of a refrigerant and a refrigerator oil (hereinafter also referred to as "composition for a refrigerator") circulates in a closed system.

A hydrofluorocarbon compound having a low environmental load has started to be used as a refrigerant to be used in a compression-type refrigerator instead of a hydrochlorofluorocarbon (HCFC) that has heretofore been frequently used. A saturated hydrofluorocarbon compound (Hydro-Fluoro-Carbon; hereinafter also referred to as "HFC"), such as 1,1,1,2-tetrafluoroethane (R134a), difluoromethane (R32), or a mixture of difluoromethane and pentafluoroethane (R410A), has been frequently used as the hydrofluorocarbon compound.

In addition, the use of an unsaturated hydrofluorocarbon compound (Hydro-Fluoro-Olefin; hereinafter also referred to as "HFO") having a low global warming potential, such as 1,3,3,3-tetrafluoropropene (R1234ze) or 2,3,3,3-tetrafluoropropene (R1234yf), has been investigated.

Further, the use of carbon dioxide as a refrigerant having a lower global warming potential (GWP) has been investigated.

In, for example, PTL 1, there is a disclosure of a composition for a refrigerator to be used in a refrigerant formed of a mixture of an unsaturated hydrofluorocarbon compound, a saturated hydrofluorocarbon compound, and carbon dioxide.

### Citation List

### Patent Literature

PTL 1: JP 2014-177607 A

### Summary of Invention

### Technical Problem

As described above, in PTL 1, an investigation has been made on the practical application of a mixed refrigerant containing carbon dioxide. However, heat stability in the entirety of the composition for a refrigerator including the mixed refrigerant and a refrigerator oil may vary depending on the selection of the composition of the mixed refrigerant and the composition of the refrigerator oil.

The present invention has been made in view of the above-mentioned problem, and an object of the present invention is to provide a composition for a refrigerator, which is a mixture of a mixed refrigerant containing carbon dioxide and being a refrigerant having a low global warming potential, and a refrigerator oil, and is excellent in heat stability.

### Solution to Problem

The inventor of the present invention has made extensive investigations, and as a result, has found that a composition for a refrigerator including a mixed refrigerant satisfying specific composition and a refrigerator oil containing a specific base oil can solve the problem. The present invention has been completed on the basis of such finding. That is, according to the respective embodiments of the present invention, there are provided the following items [1] to [10].
[1] A composition for a refrigerator, comprising: a mixed refrigerant; and a refrigerator oil containing a base oil, wherein the mixed refrigerant contains a hydrofluorocarbon compound and carbon dioxide, wherein a content of the hydrofluorocarbon compound is less than 25 mass% with respect to a total amount of the mixed refrigerant, and wherein the base oil contains one or more kinds selected from the group consisting of: a polyvinyl ether; and a polyalkylene glycol.
[2] The composition for a refrigerator according to the above-mentioned item [1], wherein a content of the carbon dioxide is 50 mass% or more and 97 mass% or less with respect to the total amount of the mixed refrigerant.
[3] The composition for a refrigerator according to the above-mentioned item [1] or [2], wherein the content of the hydrofluorocarbon compound is 3 mass% or more and less than 25 mass% with respect to the total amount of the mixed refrigerant.
[4] The composition for a refrigerator according to any one of the above-mentioned items [1] to [3], wherein the content of the hydrofluorocarbon compound is 3 mass% or more and 20 mass% or less with respect to the total amount of the mixed refrigerant.
[5] The composition for a refrigerator according to any one of the above-mentioned items [1] to [4], wherein the hydrofluorocarbon compound contains 70 mass% or more and 100 mass% or less of an unsaturated hydrofluorocarbon compound.
[6] The composition for a refrigerator according to any one of the above-mentioned items [1] to [5], wherein a content of the one or more kinds selected from the group consisting of: the polyvinyl ether; and the polyalkylene glycol is 90 mass% or more and 100 mass% or less with respect to a total amount of the base oil.
[7] The composition for a refrigerator according to any one of the above-mentioned items [1] to [6], wherein a content of the polyalkylene glycol is 90 mass% or more and 100 mass% or less with respect to a total amount of the base oil.
[8] The composition for a refrigerator according to any one of the above-mentioned items [1] to [7], wherein a total content of the mixed refrigerant and the refrigerator oil in the composition for a refrigerator is 90 mass% or more and 100 mass% or less.
[9] A refrigerator oil to be used with a mixed refrigerant, which contains a hydrofluorocarbon compound and carbon dioxide, and in which a content of the hydrofluorocarbon compound is less than 25 mass%, the refrigerator oil comprising a base oil, wherein the base oil contains one or more kinds selected from the group consisting of: a polyvinyl ether; and a polyalkylene glycol.
[10] A method of producing the composition for a refrigerator of any one of the above-mentioned items [1] to [8], comprising a step of mixing a mixed refrigerant and a refrigerator oil containing a base oil, wherein the mixed refrigerant contains a hydrofluorocarbon compound and carbon dioxide, wherein a content of the hydrofluorocarbon compound is less than 25 mass% with respect to a total amount of the mixed refrigerant, and wherein the base oil contains one or more kinds selected from the group consisting of: a polyvinyl ether; and a polyalkylene glycol.

### Advantageous Effects of Invention

The present invention can provide the composition for a refrigerator, which is a mixture of a mixed refrigerant containing carbon dioxide and being a refrigerant having a low global warming potential, and a refrigerator oil, and is excellent in heat stability.

### Description of Embodiments

In this description, lower limit values and upper limit values described in stages for a preferred numerical range (e.g., the range of a content or the like) may be independently combined with each other. For example, a "preferred lower limit value (10)" and a "more preferred upper limit value (60)" taken out of the description "preferably from 10 to 90, more preferably from 30 to 60" may be combined to produce the range of "from 10 to 60." Similarly, in this description, numerical values accompanied by the terms "or more," "or less," "less than," and "more than" related to the description of a numerical range are numerical values that may be freely combined.

### [Composition for Refrigerator]

A composition for a refrigerator according to an embodiment of the present invention is a composition for a refrigerator, including: a mixed refrigerant; and a refrigerator oil containing a base oil, wherein the mixed refrigerant contains a hydrofluorocarbon compound and carbon dioxide, wherein a content of the hydrofluorocarbon compound is less than 25 mass% with respect to a total amount of the mixed refrigerant, and wherein the base oil contains one or more kinds selected from the group consisting of: a polyvinyl ether; and a alkylene glycol.

A case in which the mixed refrigerant is free of carbon dioxide is not desired from the viewpoint of its global warming potential. In addition, when the base oil is free of the one or more kinds selected from the group consisting of: the polyvinyl ether; and the polyalkylene glycol, the heat stability of the composition for a refrigerator becomes insufficient. Further, also when the content of the hydrofluorocarbon compound in the mixed refrigerant is 25 mass% or more, the heat stability becomes insufficient.

The term "hydrocarbon group" as used herein means a group including only a carbon atom and a hydrogen atom. The "hydrocarbon group" includes an "aliphatic group" including a straight chain or a branched chain, an "alicyclic group" having one or more saturated or unsaturated carbon rings that are each free of aromaticity, and an "aromatic group" having one or more aromatic rings each showing aromaticity such as a benzene ring.

In addition, the term "number of ring-forming carbon atoms" as used herein represents the number of carbon atoms among atoms for forming the ring itself of a compound having a structure in which its atoms are bonded in a ring manner. When the ring is substituted with a substituent, carbon in the substituent is not included in the number of ring-forming carbon atoms.

In addition, the number of ring-forming atoms represents the number of the atoms for forming the ring itself of the compound having a structure in which its atoms are bonded in a ring manner. An atom that does not form the ring (e.g., a hydrogen atom that terminates a bonding site of an atom for forming the ring) and an atom in a substituent when the ring is substituted with the substituent are not included in the number of ring-forming atoms.

In addition, examples of a substituent in the description "substituted or unsubstituted" include: an alkyl group having 1 or more and 10 or less (preferably 1 or more and 6 or less, more preferably 1 or more and 4 or less, still more preferably 1 or more and 3 or less) carbon atoms; a cycloalkyl group having 3 or more and 10 or less (preferably 3 or more and 8 or less, more preferably 4 or more and 6 or less, still more preferably 5 or 6) ring-forming carbon atoms; an aryl group having 6 or more and 18 or less (preferably 6 or more and 12 or less) ring-forming carbon atoms; a halogen atom (a fluorine atom, a chlorine atom, a bromine atom, or an iodine atom); a cyano group; a nitro group; a hydroxy group; and an amino group.

Those substituents may each be further substituted with any one of the above-mentioned substituents.

In addition, the term "unsubstituted" in the description "substituted or unsubstituted" means that a group of interest is not substituted with any one of those substituents, and has a hydrogen atom bonded thereto.

The respective components to be incorporated into the composition for a refrigerator are described below.

### <Mixed Refrigerant>

The mixed refrigerant contains a hydrofluorocarbon compound and carbon dioxide. The content of the hydrofluorocarbon compound is less than 25 mass% with respect to the total amount of the mixed refrigerant.

The mixed refrigerant is described below.

Specific examples of the hydrofluorocarbon compound include a saturated hydrofluorocarbon compound (HFC) and an unsaturated hydrofluorocarbon compound (HFO).

From the viewpoint of further reducing the global warming potential of the mixed refrigerant, the hydrofluorocarbon compound preferably contains 70 mass% or more and 100 mass% or less of the unsaturated hydrofluorocarbon compound, more preferably contains 80 mass% or more and 100 mass% or less thereof, and still more preferably contains 90 mass% or more and 100 mass% or less thereof.

### (Saturated Hydrofluorocarbon Compound (HFC))

The saturated hydrofluorocarbon compound (HFC) is preferably a fluorinated product of an alkane having 1 to 4 carbon atoms, more preferably a fluorinated product of an alkane having 1 to 3 carbon atoms, still more preferably a fluorinated product of an alkane having 1 or 2 carbon atoms (methane or ethane). Examples of the fluorinated product of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1,1,2,2-tetrafluoroethane (R134), and 1,1,1,2,2-pentafluoroethane (R125). Among them, difluoromethane and 1,1,1,2-tetrafluoroethane are preferred.

Those saturated hydrofluorocarbon compounds may be used alone or in combination thereof.

### (Unsaturated Hydrofluorocarbon Compound (HFO))

The unsaturated hydrofluorocarbon compound (HFO) is, for example, a compound having a carbon-carbon double bond, such as a fluorinated product of: a linear or branched chain olefin having 2 or more and 6 or less carbon atoms; or a cyclic olefin having 4 or more and 6 or less carbon atoms.

More specific examples thereof include: ethylene having introduced thereinto 1 or more and 3 or less (preferably 3) fluorine atoms; propene having introduced thereinto 1 or more and 5 or less fluorine atoms; butene having introduced thereinto 1 or more and 7 or less fluorine atoms; pentene having introduced thereinto 1 or more and 9 or less fluorine atoms; hexene having introduced thereinto 1 or more and 11 or less fluorine atoms; cyclobutene having introduced thereinto 1 or more and 5 or less fluorine atoms; cyclopentene having introduced thereinto 1 or more and 7 or less fluorine atoms; and cyclohexene having introduced thereinto 1 or more and 9 or less fluorine atoms.

Among those HFOs, a fluorinated product of propene is preferred, propene having introduced thereinto 3 or more and 5 or less fluorine atoms is more preferred, and propene having introduced thereinto 4 fluorine atoms is still more preferred.

Suitable examples of the HFO include 1,2,3,3,3-pentafluoropropene (R1225ye), 2,3,3,3-tetrafluoropropene (R1234yf), 1,3,3,3-tetrafluoropropene (R1234ze), 1,2,3,3-tetrafluoropropene (R1234ye), 1,1,2-trifluoroethylene (R1123), cis-1,2-difluoroethylene (R1132(Z)), *trans*-1,2-difluoroethylene (R1132(E)), and (Z)-1,1,1,4,4,4-hexafluoro-2-butene (R1336mzz(Z)). Among those HFOs, one or more kinds selected from the group consisting of: R1234yf; R1234ze; R1123; and R1132(E) are preferred.

Those HFOs may be used alone or in combination thereof. Herein, a case in which the HFOs are used in combination thereof is, for example, the combination of R1234yf and R1234ze.

In the HFO to be incorporated into the mixed refrigerant, the content of the fluorinated product of propene is preferably 50 mass% or more and 100 mass% or less, more preferably 70 mass% or more and 100 mass% or less, still more preferably 90 mass% or more and 100 mass% or less, still further more preferably 100 mass% with respect to the total amount (100 mass%) of the HFO.

In addition, the HFO to be incorporated into the mixed refrigerant preferably contains at least one of R1234yf or R1234ze. In the HFO to be incorporated into the mixed refrigerant, the content of each of R1234yf and R1234ze is preferably 50 mass% or more and 100 mass% or less, more preferably 70 mass% or more and 100 mass% or less, still more preferably 90 mass% or more and 100 mass% or less, still further more preferably 100 mass% with respect to the total amount (100 mass%) of the HFO.

Although the mixed refrigerant contains the hydrofluorocarbon compound and carbon dioxide as described above, the refrigerant may further contain any other refrigerant. The other refrigerant is preferably, for example, a natural refrigerant except carbon dioxide.

### (Natural Refrigerant except Carbon Dioxide)

The natural refrigerant except carbon dioxide is, for example, one or more kinds selected from the group consisting of: a hydrocarbon-based refrigerant (HC); and ammonia. Those natural refrigerants may be used alone or in combination thereof.

The hydrocarbon-based refrigerant is preferably a hydrocarbon having 1 or more and 8 or less carbon atoms, more preferably a hydrocarbon having 1 or more and 5 or less carbon atoms, still more preferably a hydrocarbon having 3 or more and 5 or less carbon atoms. A refrigerant having 8 or less carbon atoms is preferred as a refrigerant because the boiling point of the refrigerant does not become excessively high. Examples of the hydrocarbon-based refrigerant include one or more kinds selected from the group consisting of: methane; ethane; ethylene; propane (R290); cyclopropane; propylene; *n*-butane; isobutane (R600a); 2-methylbutane; *n*-pentane; isopentane; and cyclopentane isobutane. Those hydrocarbon-based refrigerants may be used alone or in combination thereof.

### (Mixing Ratio of Mixed Refrigerant)

As described above, the mixed refrigerant needs to contain carbon dioxide from the viewpoint of reducing its global warming potential.

The content of carbon dioxide in the mixed refrigerant is preferably 50 mass% or more, more preferably 75 mass% or more, still more preferably 80 mass% or more with respect to the total amount of the mixed refrigerant, and is preferably 97 mass% or less.

Meanwhile, from the viewpoint of the heat stability of the composition for a refrigerator, the content of the above-mentioned hydrofluorocarbon compound needs to be less than 25 mass% with respect to the total amount of the mixed refrigerant, and is preferably 20 mass% or less, more preferably 15 mass% or less. In addition, the content is preferably 3 mass% or more, more preferably 5 mass% or more.

### [Refrigerator Oil]

The refrigerator oil contains the base oil containing the one or more kinds selected from the group consisting of: the polyvinyl ether (hereinafter also referred to as "PVE"); and the polyalkylene glycol (hereinafter also referred to as "PAG").

From the viewpoint of obtaining more satisfactory stability, the content of the base oil is preferably 90 mass% or more and 100 mass% or less, more preferably 95 mass% or more and 100 mass% or less, still more preferably 97 mass% or more and 100 mass% or less, still further more preferably 98 mass% or more and 100 mass% or less with respect to 100 mass% of the total amount of the refrigerator oil.

### <Base Oil>

The base oil to be incorporated into the refrigerator oil is a base oil containing the one or more kinds selected from the group consisting of: the polyvinyl ether (PVE); and the polyalkylene glycol (PAG).

From the viewpoint of obtaining more satisfactory heat stability, the base oil preferably contains one or more kinds selected from the group consisting of the PVEs.

From the viewpoint of making refrigerant solubility more satisfactory, the content of the one or more kinds selected from the group consisting of: the PVE; and the PAG in 100 mass% of the total amount of the base oil is preferably 80 mass% or more and 100 mass% or less, more preferably 90 mass% or more and 100 mass% or less, still more preferably 95 mass% or more and 100 mass% or less, still further more preferably 98 mass% or more and 100 mass% or less. In addition, the content of the PAG in 100 mass% of the total amount of the base oil is preferably 80 mass% or more and 100 mass% or less, more preferably 90 mass% or more and 100 mass% or less, still more preferably 95 mass% or more and 100 mass% or less, still further more preferably 98 mass% or more and 100 mass% or less.

The PVE and the PAG to be incorporated into the base oil are sequentially described below.

### (Polyvinyl Ether (PVE))

The polyvinyl ether (PVE) is, for example, a polymer having one or more kinds of vinyl ether-derived constituent units. When the base oil contains the PVE, the base oil may contain one kind of the PVEs alone, or may contain two or more kinds thereof in combination.

Among the PVEs, a polymer having one or more kinds of vinyl ether-derived constituent units, and having, in a side chain thereof, an alkyl group having 1 or more and 4 or less carbon atoms is preferred from the viewpoint of obtaining more satisfactory stability.

Among the PVEs, a polymer (A1) having one or more kinds of constituent units each represented by the following general formula (A-1) is preferred.

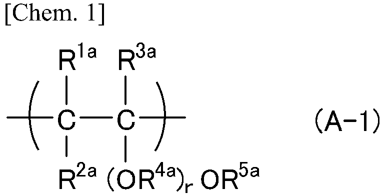

In the general formula (A-1), R^{1a}, R^{2a}, and R^{3a} each independently represent a hydrogen atom, or a hydrocarbon group having 1 or more and 8 or less carbon atoms, R^{4a} represents a divalent hydrocarbon group having 2 or more and 10 or less carbon atoms, and R^{5a} represents a hydrocarbon group having 1 or more and 10 or less carbon atoms.

In the general formula (A-1), "r" represents the average number of units each represented by OR^{4a}, and represents a number of 0 or more and 10 or less, preferably a number of 0 or more and 5 or less, more preferably a number of 0 or more and 3 or less, still more preferably 0.

When a plurality of OR^{4a}s are present in the general formula (A-1) (i.e., when "r" represents a number of 2 or more), the plurality of OR^{4a}s may be identical to or different from each other.

In addition, when "r" represents 0, a bond between a carbon atom (C) and -OR^{5a} in the general formula (A-1) is a single bond, and hence the carbon atom (C) and -OR^{5a} are directly bonded to each other.

Examples of the hydrocarbon group having 1 or more and 8 or less carbon atoms that may be selected as each of R^{1a}, R^{2a}, and R^{3a} include: alkyl groups, such as a methyl group, an ethyl group, various propyl groups, various butyl groups, various pentyl groups, various hexyl groups, various heptyl groups, and various octyl groups; cycloalkyl groups, such as a cyclopentyl group, a cyclohexyl group, various methylcyclohexyl groups, various ethylcyclohexyl groups, and various dimethylcyclohexyl groups; aryl groups, such as a phenyl group, various methylphenyl groups, various ethylphenyl groups, and various dimethylphenyl groups; and arylalkyl groups, such as a benzyl group, various phenylethyl groups, and various methylbenzyl groups.

The expression "various XXX groups" as used herein encompasses all isomers conceivable as XXX groups. For example, the expression "various alkyl groups" represents a "linear, branched, or cyclic hydrocarbon group," and for example, the expression "various propyl groups" represents various propyl groups, such as "a *n*-propyl group and an isopropyl group." In addition, the expression "various butyl groups" represents various butyl groups, such as "a n-butyl group, a sec-butyl group, an iso-butyl group, a tert-butyl group, and a cyclobutyl group."

The number of the carbon atoms of the hydrocarbon group that may be selected as each of R^{1a}, R^{2a}, and R^{3a} is preferably 1 or more and 6 or less, more preferably 1 or more and 4 or less, still more preferably 1 or more and 3 or less.

R^{1a}, R^{2a}, and R^{3a} each independently represent preferably a hydrogen atom, or an alkyl group having 1 or more and 8 or less carbon atoms, more preferably a hydrogen atom, or an alkyl group having 1 or more and 6 or less carbon atoms, still more preferably a hydrogen atom, or an alkyl group having 1 or more and 4 or less carbon atoms, still further more preferably a hydrogen atom, or an alkyl group having 1 or more and 3 or less carbon atoms.

R^{1a}, R^{2a}, and R^{3a} may be identical to or different from each other.

Examples of the divalent hydrocarbon group having 2 or more and 10 or less carbon atoms that may be selected as R^{4a} include: divalent aliphatic groups, such as an ethylene group, a 1,2-propylene group, a 1,3-propylene group, various butylene groups, various pentylene groups, various hexylene groups, various heptylene groups, various octylene groups, various nonylene groups, and various decylene groups; alicyclic groups that are divalent residues of alicyclic compounds, such as cyclohexane, methylcyclohexane, ethylcyclohexane, dimethylcyclohexane, and propylcyclohexane; divalent aromatic groups, such as various phenylene groups, various methylphenylene groups, various ethylphenylene groups, various dimethylphenylene groups, and various naphthylene groups; divalent alkyl aromatic groups each having a monovalent bonding site in each of the alkyl group moiety and aromatic moiety of an alkyl aromatic hydrocarbon, such as toluene, xylene, or ethylbenzene; and divalent alkyl aromatic groups each having bonding sites in the alkyl group moieties of a polyalkyl aromatic hydrocarbon, such as xylene or diethylbenzene.

The number of the carbon atoms of the hydrocarbon group that may be selected as R^{4a} is preferably 2 or more and 8 or less, more preferably 2 or more and 6 or less, still more preferably 2 or more and 4 or less.

R^{4a} represents preferably a divalent aliphatic group having 2 or more and 10 or less carbon atoms, more preferably a divalent aliphatic group having 2 or more and 6 or less carbon atoms, still more preferably a divalent aliphatic group having 2 or more and 4 or less carbon atoms.

Examples of the hydrocarbon group having 1 or more and 10 or less carbon atoms that may be selected as R^{5a} include: alkyl groups, such as a methyl group, an ethyl group, various propyl groups, various butyl groups, various pentyl groups, various hexyl groups, various heptyl groups, various octyl groups, various nonyl groups, and various decyl groups; cycloalkyl groups, such as a cyclopentyl group, a cyclohexyl groups, various methylcyclohexyl groups, various ethylcyclohexyl groups, various propylcyclohexyl groups, and various dimethylcyclohexyl groups; aryl groups, such as a phenyl group, various methylphenyl groups, various ethylphenyl groups, various dimethylphenyl groups, various propylphenyl groups, various trimethylphenyl groups, various butylphenyl groups, and various naphthyl groups; and arylalkyl groups, such as a benzyl group, various phenylethyl groups, various methylbenzyl groups, various phenylpropyl groups, and various phenylbutyl groups.

The number of the carbon atoms of the hydrocarbon group that may be selected as R^{5a} is preferably 1 or more and 8 or less, more preferably 1 or more and 6 or less.

From the viewpoint of further improving the stability of the composition for a refrigerator, R^{5a} represents preferably an alkyl group having 1 or more and 6 or less carbon atoms, more preferably an alkyl group having 1 or more and 4 or less carbon atoms.

In one aspect of the present invention, the polymer (A1) preferably has a constituent unit (α1) in which R^{5a} represents an ethyl group.

From the viewpoint of further improving the refrigerant solubility, the content of the constituent unit (α1) is preferably 60 mass% or more and 100 mass% or less, more preferably 70 mass% or more and 100 mass% or less, still more preferably 80 mass% or more and 100 mass% or less, still further more preferably 85 mass% or more and 100 mass% or less, still further more preferably 90 mass% or more and 100 mass% or less with respect to the total amount (100 mass%) of the constituent unit except a terminal constituent unit of the polymer (A1).

The number (polymerization degree) of the constituent units each represented by the general formula (A-1) in the polymer (A1) only needs to be appropriately set so that the hydroxyl value of the base oil (P) may fall within the range of 15 mgKOH/g or less.

In addition, the polymer (A1) may be a homopolymer having only one kind of the constituent units each represented by the general formula (A-1), or may be a copolymer having two or more kinds of the constituent units.

The copolymerization form of the copolymer is not particularly limited, and the copolymer may be a block copolymer, a random copolymer, or a graft copolymer.

A monovalent group derived from, for example, a saturated hydrocarbon, an ether, an alcohol, a ketone, an amide, or a nitrile may be introduced into a terminal portion of the polymer (A1).

In one aspect of the present invention, one terminal of the polymer (A1) is preferably a group represented by the following general formula (A-1-i).

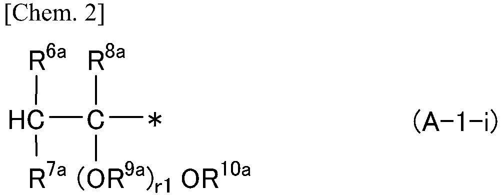

In the general formula (A-1-i), * represents a bonding position with a carbon atom in the constituent unit represented by the general formula (A-1).

In the general formula (A-1-i), R^{6a}, R^{7a}, and R^{8a} each independently represent a hydrogen atom, or a hydrocarbon group having 1 or more and 8 or less carbon atoms, preferably a hydrogen atom, or a hydrocarbon group having 1 or more and 6 or less carbon atoms, more preferably a hydrogen atom, or an alkyl group having 1 or more and 6 or less carbon atoms, still more preferably a hydrogen atom, or an alkyl group having 1 or more and 4 or less carbon atoms.

R^{6a}, R^{7a}, and R^{8a} may be identical to or different from each other.

Examples of the hydrocarbon group having 1 to 8 carbon atoms that may be selected as each of R^{6a}, R^{7a}, and R^{8a} include the same groups as those listed as the examples of the hydrocarbon group having 1 or more and 8 or less carbon atoms that may be selected as each of R^{1a}, R^{2a}, and R^{3a} in the general formula (A-1).

In the general formula (A-1-i), R^{9a} represents a divalent hydrocarbon group having 2 or more and 10 or less carbon atoms, preferably a divalent hydrocarbon group having 2 or more and 8 or less carbon atoms, more preferably a divalent hydrocarbon group having 2 or more and 6 or less carbon atoms, still more preferably a divalent aliphatic group having 2 or more and 4 or less carbon atoms.

In the general formula (A-1-i), r1 represents the average number of units each represented by OR^{9a}, and represents a number of 0 or more and 10 or less, preferably a number of 0 or more and 5 or less, more preferably a number of 0 or more and 3 or less, still more preferably 0.

When a plurality of OR^{9a}s are present in the general formula (A-1-i) (i.e., when r1 represents a number of 2 or more), the plurality of OR^{9a}s may be identical to or different from each other.

In addition, when r1 represents 0, a bond between a carbon atom (C) and -OR^{10a} in the general formula (A-1-i) is a single bond, and hence the carbon atom (C) and -OR^{10a} are directly bonded to each other.

Examples of the divalent hydrocarbon group having 2 or more and 10 or less carbon atoms that may be selected as R^{9a} include the same groups as those listed as the examples of the divalent hydrocarbon group having 2 or more and 10 or less carbon atoms that may be selected as R^{4a} in the general formula (A-1).

In the general formula (A-1-i), R^{10a} represents a hydrocarbon group having 1 or more and 10 or less carbon atoms, preferably a hydrocarbon group having 1 or more and 8 or less carbon atoms, more preferably an alkyl group having 1 or more and 8 or less carbon atoms.

When r1 in the general formula (A-1-i) represents 0, R^{10a} still more preferably represents an alkyl group having 1 or more and 6 or less carbon atoms, and when r1 represents 1 or more, R^{10a} still more preferably represents an alkyl group having 1 or more and 4 or less carbon atoms.

Examples of the hydrocarbon group having 1 or more and 10 or less carbon atoms that may be selected as R^{10a} include the same groups as those listed as the examples of the hydrocarbon group having 1 or more and 10 or less carbon atoms that may be selected as R^{5a} in the general formula (A-1).

In addition, in the polymer (A1), it is preferred that one terminal thereof be a group represented by the general formula (A-1-i), and the other terminal thereof be one kind selected from the group consisting of: a group represented by the general formula (A-1-i); a group represented by the following general formula (A-1-ii); a group represented by the following general formula (A-1-iii); and a group having an olefinically unsaturated bond.

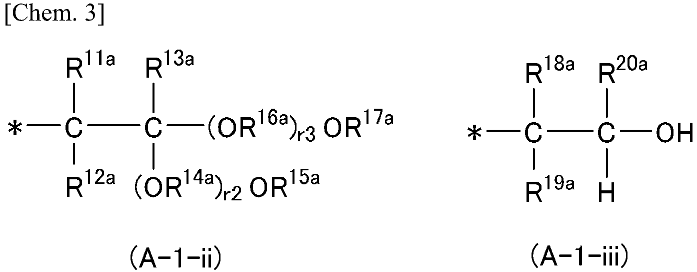

In the general formulae (A-1-ii) and (A-1-iii), R^{11a}, R^{12a}, R^{13a}, R^{18a}, R^{19a}, and R^{20a} each independently represent a hydrogen atom, or a hydrocarbon group having 1 or more and 8 or less carbon atoms, preferably a hydrogen atom, or a hydrocarbon group having 1 or more and 6 or less carbon atoms, more preferably a hydrogen atom, or an alkyl group having 1 or more and 6 or less carbon atoms, still more preferably a hydrogen atom, or an alkyl group having 1 or more and 3 or less carbon atoms. R^{11a}, R^{12a}, R^{13a}, R^{18a}, R^{19a}, and R^{20a} may be identical to or different from each other.

Examples of the hydrocarbon group that may be selected as each of R^{11a}, R^{12a}, R^{13a}, R^{18a}, R^{19a}, and R^{20a} include the same groups as those listed as the examples of the hydrocarbon group having 1 or more and 8 or less carbon atoms that may be selected as each of R^{1a}, R^{2a}, and R^{3a} in the general formula (A-1).

In the general formula (A-1-ii), R^{14a} and R^{16a} each independently represent a divalent hydrocarbon group having 2 or more and 10 or less carbon atoms, preferably a divalent hydrocarbon group having 2 or more and 6 or less carbon atoms, more preferably a divalent aliphatic group having 2 or more and 4 or less carbon atoms. Examples of the divalent hydrocarbon group that may be selected as each of R^{14a} and R^{16a} include the same groups as those listed as the examples of the divalent hydrocarbon group that may be selected as R^{4a} in the general formula (A-1).

In the general formula (A-1-ii), r2 and r3 represent the average numbers of units represented by OR^{14a} and OR^{16a}, respectively, and each independently represent a number of 0 or more and 10 or less, preferably a number of 0 or more and 5 or less, more preferably a number of 0 or more and 3 or less, still more preferably 0.

When a plurality of OR^{14a}s or a plurality of OR^{16a}s are present in the general formula (A-1-ii), the plurality of OR^{14a}s or the plurality of OR^{16a}s may be identical to or different from each other.

In addition, when r2 represents 0, a bond between a carbon atom (C) and -OR^{15a} in the general formula (A-1-ii) is a single bond, and hence the carbon atom (C) and -OR^{15a} are directly bonded to each other. Similarly, when r3 represents 0, a bond between a carbon atom (C) and -OR^{17a} in the general formula (A-1-ii) is a single bond, and hence the carbon atom (C) and - OR^{17a} are directly bonded to each other.

In the general formula (A-1-ii), R^{15a} and R^{17a} each independently represent a hydrocarbon group having 1 or more and 10 or less carbon atoms, preferably a hydrocarbon group having 1 or more and 8 or less carbon atoms, more preferably an alkyl group having 1 or more and 8 or less carbon atoms.

When r2 represents 0, R^{15a} still more preferably represents an alkyl group having 1 or more and 6 or less carbon atoms, and when r2 represents 1 or more, R^{15a} still more preferably represents an alkyl group having 1 or more and 4 or less carbon atoms. Similarly, when r3 represents 0, R^{17a} still more preferably represents an alkyl group having 1 or more and 6 or less carbon atoms, and when r3 represents 1 or more, R^{17a} still more preferably represents an alkyl group having 1 or more and 4 or less carbon atoms.

### (Polyalkylene Glycol (PAG))

The polyalkylene glycol (PAG) is preferably a compound (B1) represented by the following general formula (B-1). When the base oil contains the PAG, the base oil may contain one kind of the PAGs alone, or may contain two or more kinds thereof in combination.

R^{1b}-[(OR^{2b})ₘ-OR^{3b}]ₙ (B-1)

In the general formula (B-1), R^{1b} represents a hydrogen atom, a monovalent hydrocarbon group having 1 or more and 10 or less carbon atoms, an acyl group having 2 or more and 10 or less carbon atoms, a hydrocarbon group that has 1 or more and 10 or less carbon atoms, and is divalent or more and hexavalent or less, or a substituted or unsubstituted heterocyclic group having 3 or more and 10 or less ring-forming atoms.

R^{2b} represents an alkylene group having 2 or more and 4 or less carbon atoms.

R^{3b} represents a hydrogen atom, a monovalent hydrocarbon group having 1 or more and 10 or less carbon atoms, an acyl group having 2 or more and 10 or less carbon atoms, or a substituted or unsubstituted heterocyclic group having 3 or more and 10 or less ring-forming atoms.

In the general formula (B-1), "n" represents an integer of 1 or more and 6 or less, preferably an integer of 1 or more and 4 or less, more preferably an integer of 1 or more and 3 or less, still more preferably 1.

"n" is determined in accordance with the number of the bonding sites of R^{1b} in the general formula (B-1). For example, when R^{1b} represents an alkyl group or an acyl group, "n" represents 1, and when R^{1b} represents a hydrocarbon group or a heterocyclic group, and the valence of the group is divalent, trivalent, tetravalent, pentavalent, or hexavalent, "n" represents 2, 3, 4, 5, or 6, respectively.

In the general formula (B-1), "m" represents the average number of units each represented by OR^{2b}, and represents a number of 1 or more, preferably such a number that the average of m×n becomes 6 or more and 80 or less. The value of the "m" is not particularly limited, and is preferably such a number that the average of m×n satisfies the above-mentioned range.

When a plurality of OR^{2b}s are present, the plurality of OR^{2b}s may be identical to or different from each other. In addition, when "n" represents 2 or more, a plurality of R^{3b}s in one molecule may be identical to or different from each other.

Examples of the monovalent hydrocarbon group that may be selected as each of R^{1b} and R^{3b} include: alkyl groups, such as a methyl group, an ethyl group, various propyl groups, various butyl groups, various pentyl groups, various hexyl groups, various heptyl groups, various octyl groups, various nonyl groups, and various decyl groups; cycloalkyl groups, such as a cyclopentyl group, a cyclohexyl groups, various methylcyclohexyl groups, various ethylcyclohexyl groups, various propylcyclohexyl groups, and various dimethylcyclohexyl groups; aryl groups, such as a phenyl group, various methylphenyl groups, various ethylphenyl groups, various dimethylphenyl groups, various propylphenyl groups, various trimethylphenyl groups, various butylphenyl groups, and various naphthyl groups; and arylalkyl groups, such as a benzyl group, various phenylethyl groups, various methylbenzyl groups, various phenylpropyl groups, and various phenylbutyl groups.

The number of the carbon atoms of the monovalent hydrocarbon group is preferably 1 or more and 10 or less, more preferably 1 or more and 6 or less, still more preferably 1 or more and 3 or less.

The hydrocarbon group moiety of the acyl group having 2 or more and 10 or less carbon atoms that may be selected as each of R^{1b} and R^{3b} may be linear, branched, or cyclic. Examples of the alkyl group moiety include hydrocarbon groups each having 1 or more and 9 or less carbon atoms among the hydrocarbon groups that may each be selected as each of R^{1b} and R^{3b} described above.

The number of the carbon atoms of the acyl group is preferably 2 or more and 10 or less, more preferably 2 or more and 8 or less, still more preferably 2 or more and 6 or less.

Examples of the hydrocarbon group that is divalent or more and hexavalent or less that may be selected as R^{1b} include: a residual group obtained by further removing 1 or more and 5 or less hydrogen atoms from the monovalent hydrocarbon group that may be selected as R^{1b} described above; and a residual group obtained by removing a hydroxy group from a polyhydric alcohol, such as trimethylolpropane, glycerin, pentaerythritol, sorbitol, 1,2,3-trihydroxycyclohexane, or 1,3,5-trihydroxycyclohexane.

The number of the carbon atoms of the hydrocarbon group that is divalent or more and hexavalent or less is preferably 2 or more and 10 or less, more preferably 2 or more and 8 or less, still more preferably 2 or more and 6 or less.

The heterocyclic group that may be selected as each of R^{1b} and R^{3b} is preferably an oxygen atom-containing heterocyclic group or a sulfur atom-containing heterocyclic group. The heterocyclic group may be a saturated ring or an unsaturated ring.

An example of the oxygen atom-containing heterocyclic group is a residual group obtained by removing 1 or more and 6 or less hydrogen atoms of: an oxygen atom-containing saturated heterocycle, such as ethylene oxide, 1,3-propylene oxide, tetrahydrofuran, tetrahydropyran, or hexamethylene oxide; or an oxygen atom-containing unsaturated heterocycle, such as acetylene oxide, furan, pyran, oxycycloheptatriene, isobenzofuran, or isochromene.

In addition, an example of the sulfur atom-containing heterocyclic group is a residual group obtained by removing 1 or more and 6 or less hydrogen atoms of: a sulfur atom-containing saturated heterocycle, such as ethylene sulfide, trimethylene sulfide, tetrahydrothiophene, tetrahydrothiopyran, or hexamethylene sulfide; or a sulfur atom-containing unsaturated heterocycle, such as acetylene sulfide, thiophene, thiapyran, or thiotripyridene.

In addition, the heterocyclic group that may be selected as each of R^{1b} and R^{3b} may have a substituent, and the substituent may be bonded to an oxygen atom in the general formula (B-1). Although the substituent is as described above, the substituent is preferably an alkyl group having 1 or more and 6 or less carbon atoms, more preferably an alkyl group having 1 or more and 4 or less carbon atoms, still more preferably an alkyl group having 1 or more and 3 or less carbon atoms.

From the viewpoint of the heat stability of the composition for a refrigerator with the mixed refrigerant, the number of the ring-forming atoms of the heterocyclic group is preferably 3 or more and 10 or less, more preferably 3 or more and 8 or less, still more preferably 3 or more and 6 or less.

Examples of the alkylene group that may be selected as R^{2b} include: alkylene groups each having 2 carbon atoms, such as a dimethylene group (-CH₂CH₂-) and an ethylene group (-CH(CH₃)-); alkylene groups each having 3 carbon atoms, such as a trimethylene group (-CH₂CH₂CH₂-), a propylene group (-CH(CH₃)CH₂-), a propylidene group (-CHCH₂CH₃-), and an isopropylidene group (-C(CH₃)₂-); and alkylene groups each having 4 carbon atoms, such as a tetramethylene group (-CH₂CH₂CH₂CH₂-), a 1-methyltrimethylene group (-CH(CH₃)CH₂CH₂-), a 2-methyltrimethylene group (-CH₂CH(CH₃)CH₂-), and a butylene group (-C(CH₃)₂CH₂-).

When a plurality of R^{2b}s are present, the plurality of R^{2b}s may be identical to each other, or may be a combination of two or more kinds of alkylene groups.

R^{2b} preferably represents a propylene group (-CH(CH₃)CH₂-) among those alkylene groups.

The content of an oxypropylene unit (-OCH(CH₃)CH₂-) in the compound (B1) represented by the general formula (B-1) is preferably 50 mol% or more and 100 mol% or less, more preferably 65 mol% or more and 100 mol% or less, still more preferably 80 mol% or more and 100 mol% or less with respect to the total amount (100 mol%) of an oxyalkylene unit (OR^{2b}) in the compound (B1).

Among the compounds (B1), one or more kinds selected from the group consisting of: a polyoxypropylene glycol dimethyl ether represented by the following general formula (B-1-i); a polyoxyethylene polyoxypropylene glycol dimethyl ether represented by the following general formula (B-1-ii); a polyoxypropylene glycol monobutyl ether represented by the following general formula (B-1-iii); and a polyoxypropylene glycol diacetate are preferred.

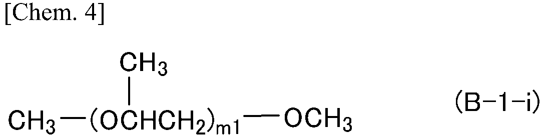

In the general formula (B-1-i), m1 represents the average number of oxypropylene units, and represents a number of 1 or more, preferably a number of 6 or more and 80 or less.

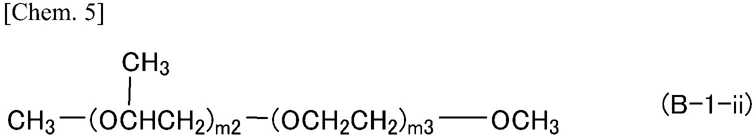

In the general formula (B-1-ii), m2 and m3 represent the average number of oxypropylene units and the average number of oxyethylene units, respectively, and each independently represent a number of 1 or more, preferably such a number that the value of m2+m3 becomes 6 or more and 80 or less.

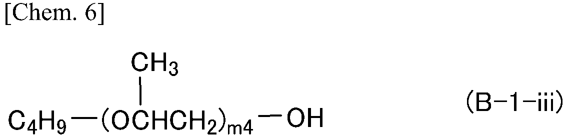

In the general formula (B-1-iii), m4 represents the average number of oxypropylene units, and represents a number of 1 or more, preferably a number of 6 or more and 80 or less.

m1 in the general formula (B-1-i), m2 and m3 in the general formula (B-1-ii), and m4 in the general formula (B-1-iii) are values that are each appropriately set so that the hydroxyl value of the base oil (P) may fall within the range of 15 mgKOH/g or less. The values are not particularly limited as long as the values are each adjusted so that the hydroxyl value may fall within the predetermined range, and the values are each preferably a number satisfying the above-mentioned range.

It is preferred that the number-average molecular weights (Mn) of the above-mentioned PVE and PAG, and a POE to be described later be each independently 300 or more and 3,000 or less.

When the number-average molecular weights (Mn) are each 300 or more, the lubricity and sealing property of the composition for a refrigerator become satisfactory. Meanwhile, when the number-average molecular weights (Mn) are each 3,000 or less, the compatibility thereof with the mixed refrigerant becomes satisfactory.

From such viewpoints, the number-average molecular weights (Mn) of the PVE and the PAG, and the POE to be described later are each independently more preferably 350 or more, still more preferably 400 or more, and are each independently more preferably 2,800 or less, still more preferably 2,500 or less, still further more preferably 2,000 or less, still further more preferably 1,500 or less.

The number-average molecular weights (Mn) are each a value measured by a method described in Examples to be described later.

### (Other Base Oil)

The base oil may further contain any other base oil in addition to the one or more kinds of base oils selected from the group consisting of: the PVE; and the PAG to the extent that the effect of the present invention is not impaired.

Examples of the other base oil include: other synthetic oils that do not correspond to a mineral oil, or the above-mentioned PVE or PAG, such as a polyol ester (POE), a polyester, a polycarbonate, a hydrogenated product of an α-olefin oligomer, an alicyclic hydrocarbon compound, and an alkylated aromatic hydrocarbon compound; and a mineral oil.

The polyol ester (POE) is, for example, an ester of a diol or a polyol and a fatty acid. When the base oil contains the POE, the base oil may contain one kind of the POEs alone, or may contain two or more kinds thereof in combination.

Among the POEs, an ester of a diol or a polyol having 3 or more and 20 or less hydroxy groups and a fatty acid having 3 or more and 20 or less carbon atoms is preferred.

Examples of the diol include ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol.

Examples of the polyol include: polyhydric alcohols, such as trimethylolethane, trimethylolpropane, trimethylolbutane, di-(trimethylolpropane), tri-(trimethylolpropane), pentaerythritol, di-(pentaerythritol), tri-(pentaerythritol), glycerin, polyglycerins (dimer to icosamer of glycerin), 1,3,5-pentanetriol, sorbitol, sorbitan, a sorbitol glycerin condensate, adonitol, arabitol, xylitol, and mannitol; sugars, such as xylose, arabinose, ribose, rhamnose, glucose, fructose, galactose, mannose, sorbose, cellobiose, maltose, isomaltose, trehalose, sucrose, raffinose, gentianose, and melezitose; and partially esterified products thereof and methyl glucoside (glycoside).

Among those polyols, a hindered alcohol, such as neopentyl glycol, trimethylolethane, trimethylolpropane, trimethylolbutane, di-(trimethylolpropane), tri-(trimethylolpropane), pentaerythritol, di-(pentaerythritol), or tri-(pentaerythritol), is preferred.

The number of the carbon atoms of the fatty acid is preferably 3 or more, more preferably 4 or more, and is preferably 20 or less, more preferably 16 or less, still more preferably 9 or less.

The number of the carbon atoms of the fatty acid includes the carbon atom of the carboxy group (-COOH) of the fatty acid.

In addition, although the fatty acid may be a linear fatty acid or a branched fatty acid, the acid is preferably a linear fatty acid from the viewpoint of the lubrication performance of the composition for a refrigerator, and the acid is preferably a branched fatty acid from the viewpoint of the hydrolysis stability thereof. Further, the fatty acid may be a saturated fatty acid or an unsaturated fatty acid.

Examples of the fatty acid include: linear fatty acids or branched fatty acids, such as isobutyric acid, propionic acid, butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, icosanoic acid, and oleic acid; and a so-called neo acid in which an α-carbon atom is quaternary.

The fatty acid is preferably one or more kinds selected from the group consisting of: isobutyric acid; valeric acid (n-pentanoic acid); caproic acid (n-hexanoic acid); enanthic acid (n-heptanoic acid); caprylic acid (n-octanoic acid); pelargonic acid (n-nonanoic acid); capric acid (n-decanoic acid); oleic acid (cis-9-octadecenoic acid); isopentanoic acid (3-methylbutanoic acid); 2-methylhexanoic acid; 2-ethylpentanoic acid; 2-ethylhexanoic acid; and 3,5,5-trimethylhexanoic acid.

The POE may be a partial ester in which not all of the hydroxy groups of its polyol are esterified and part of the hydroxy groups remain, or may be a complete ester in which all the hydroxy groups are esterified. Alternatively, the POE may be a mixture of the partial ester and the complete ester, and is preferably the complete ester.

Among the POEs, an ester of a hindered alcohol, such as neopentyl glycol, trimethylolethane, trimethylolpropane, trimethylolbutane, di-(trimethylolpropane), tri-(trimethylolpropane), pentaerythritol, di-(pentaerythritol), or tri-(pentaerythritol), is preferred, and an ester of neopentyl glycol, trimethylolethane, trimethylolpropane, trimethylolbutane, or pentaerythritol, or an ester of di-(pentaerythritol) is more preferred from the viewpoint that the POE is more excellent in hydrolysis stability. Further, an ester of pentaerythritol or an ester of di-(pentaerythritol) is still more preferred from the viewpoint that the POE is still more excellent in compatibility with the mixed refrigerant and hydrolysis stability.

One suitable aspect of the POE is preferably, for example: a diester of one or more kinds of fatty acids selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid, and neopentyl glycol; a triester of one or more kinds of fatty acids selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid, and trimethylolethane; a triester of one or more kinds of fatty acids selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid, and trimethylolpropane; a triester of one or more kinds of fatty acids selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid, and trimethylolbutane; or a tetraester of one or more kinds of fatty acids selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid, and pentaerythritol.

One aspect of the POE is preferably an ester of a polyol and a mixed fatty acid containing two or more kinds of fatty acids, more preferably an ester of: a polyol having 2 or more and 20 or less hydroxy groups; and a mixed fatty acid containing two or more kinds of fatty acids each having 3 or more and 20 or less carbon atoms.

The mixed fatty acid containing two or more kinds of fatty acids is preferably, for example, a mixed fatty acid obtained by combining two or more kinds of fatty acids selected from the group consisting of fatty acids each having 4 or more and 9 or less carbon atoms. The mixed fatty acid is more preferably, for example, one or more kinds of mixed fatty acids selected from the group consisting of: a mixed fatty acid obtained by combining a fatty acid having 8 carbon atoms and a fatty acid having 9 carbon atoms; a mixed fatty acid obtained by combining a fatty acid having 5 carbon atoms and a fatty acid having 9 carbon atoms; and a mixed fatty acid obtained by combining a fatty acid having 4 carbon atoms, a fatty acid having 5 carbon atoms, and a fatty acid having 9 carbon atoms. The mixed fatty acid is still more preferably, for example, a mixed fatty acid obtained by combining a fatty acid having 8 carbon atoms and a fatty acid having 9 carbon atoms.

When the POE is an ester of a polyol and two or more kinds of fatty acids, the ester may be an ester obtained by mixing two or more kinds of esters each containing one kind of fatty acid and the polyol.

Examples of the mineral oil include: a refined oil obtained by subjecting a lubricating oil fraction obtained by distilling a normal-pressure residual oil, which is obtained by distilling a crude oil, such as a paraffin base crude oil, an intermediate base crude oil, or a naphthene base crude oil, under normal pressure, under reduced pressure to one or more kinds of treatment among solvent deasphalting, solvent extraction or hydrocracking, solvent dewaxing or catalytic dewaxing, and hydrorefining; an oil produced by isomerizing a mineral oil-based wax; and an oil produced by subjecting a residual wax (gas-to-liquid wax) in a GTL process including a Fischer-Tropsch process to hydroisomerization dewaxing.

The synthetic oils and the mineral oils that may each be used as the above-mentioned other base oil may be used alone or in combination thereof.

When the base oil contains the other base oil, from the viewpoint of the above-mentioned refrigerant solubility, the content of the other base oil in 100 mass% of the total amount of the base oil is preferably more than 0 mass% and 10 mass% or less, more preferably more than 0 mass% and 5 mass% or less, still more preferably more than 0 mass% and 2 mass% or less.

The content of the base oil in the refrigerator oil is preferably 90 mass% or more and 100 mass% or less, more preferably 95 mass% or more and 100 mass% or less, still more preferably 97 mass% or more and 100 mass% or less with respect to the total amount (100 mass%) of the refrigerator oil.

### (Property of Base Oil)

The kinematic viscosity of the base oil at 100°C (hereinafter also referred to as "100°C kinematic viscosity") is preferably 2.0 mm²/s or more and 50.0 mm²/s or less.

When the kinematic viscosity is 2.0 mm²/s or more, the lubricity and sealing property of the composition for a refrigerator become satisfactory. Meanwhile, when the kinematic viscosity is 50.0 mm²/s or less, the energy-saving property of the composition for a refrigerator to be obtained becomes satisfactory.

From such viewpoints, the 100°C kinematic viscosity of the base oil is preferably 3.0 mm²/s or more, more preferably 4.0 mm²/s or more, still more preferably 5.0 mm²/s or more, and is preferably 40.0 mm²/s or less, more preferably 30.0 mm²/s or less, still more preferably 25.0 mm²/s or less, still further more preferably 15.0 mm²/s or less.

In addition, the kinematic viscosity of the base oil at 40°C (hereinafter also referred to as "40°C kinematic viscosity") is preferably 10.0 mm²/s or more, more preferably 20.0 mm²/s or more, still more preferably 25.0 mm²/s or more, and is preferably 250.0 mm²/s or less, more preferably 200.0 mm²/s or less, still more preferably 150.0 mm²/s or less, still further more preferably 120.0 mm²/s or less.

The 100°C kinematic viscosity and 40°C kinematic viscosity of the base oil are each a value measured by a method described in Examples to be described later.

From the viewpoint of improving the heat stability of the composition for a refrigerator , the hydroxyl value of the base oil is preferably 30 mgKOH/g or less, more preferably 25 mgKOH/g or less, still more preferably 20 mgKOH/g or less, still further more preferably 15 mgKOH/g or less, yet still further more preferably 10 mgKOH/g or less, even more preferably 5 mgKOH/g or less. In addition, the hydroxyl value of the base oil (A) is typically 0.1 mgKOH/g or more.

In this description, the hydroxyl value of the base oil is a value measured in conformity with JIS K0070:1992 by a neutralization titration method.

From the viewpoint of safety, the flash point of the base oil is preferably 170°C or more. From such viewpoint, the flash point of the base oil is more preferably 180°C or more, still more preferably 190°C or more, still further more preferably 195°C or more.

In addition, the upper limit of the flash point of the base oil is not particularly limited, but is, for example, 300°C or less.

The flash point of the base oil is a value measured by a method described in Examples to be described later.

### <Other Additive>

The refrigerator oil may contain any one of various additives (hereinafter also referred to as "other additive") that a refrigerator oil may contain in addition to the base oil, and the other additive is, for example, one or more kinds of additives selected from the group consisting of: an antioxidant; an oiliness improver; an extreme-pressure agent; an acid scavenger; an oxygen scavenger; a metal deactivator; a rust inhibitor; and an antifoaming agent.

When the refrigerator oil contains the other additive, in terms of, for example, an effect and economical efficiency, the total content of the other additive is preferably 0.1 mass% or more, more preferably 0.2 mass% or more, still more preferably 0.3 mass% or more with respect to the total amount (100 mass%) of the refrigerator oil, and is preferably 10 mass% or less, more preferably 5 mass% or less, still more preferably 3 mass% or less, still further more preferably 2 mass% or less.

However, the refrigerator oil may be free of the other additive.

Examples of the antioxidant include a phenol-based antioxidant and an amine-based antioxidant.

Examples of the phenol-based antioxidant include a monophenol-based antioxidant and a polyphenol-based antioxidant.

Examples of the monophenol-based antioxidant include: alkyl-3-(3,5-di-tert-butyl-4-hydroxyphenyl) propionates (having an alkyl group having 4 or more and 20 or less carbon atoms, preferably an alkyl group having 8 or more and 18 or less carbon atoms), such as *n-*octyl-3-(3,5-di-tert-butyl-4-hydroxyphenyl) propionate, 6-methylheptyl-3-(3,5-di-tert-butyl-4-hydroxyphenyl) propionate, and n-octadecyl-3-(3,5-di-tert-butyl-4-hydroxyphenyl) propionate; 2,6-di-*tert*-butyl-4-alkylphenols (having an alkyl group having 1 or more and 4 or less carbon atoms), such as 2,6-di-tert-butyl-4-methylphenol and 2,6-di-tert-butyl-4-ethylphenol; and 2,4-dimethyl-6-tert-butylphenol and 2,6-di-*tert*-amyl-*p*-cresol.

Examples of the polyphenol-based antioxidant include 4,4'-methylenebis(2,6-di-tertbutylphenol), 4,4'-bis(2,6-di-tert-butylphenol), 4,4'-bis(2-methyl-6-tert-butylphenol), 2,2'-methylenebis(4-ethyl-6-tert-butylphenol), 2,2'-methylenebis(4-methyl-6-tert-butylphenol), 4,4'-butylidenebis(3-methyl-6-tert-butylphenol), 4,4'-isopropylidenebis(2,6-di-tertbutylphenol), 2,2'-methylenebis(4-methyl-6-nonylphenol), 2,2'-isobutylidenebis(4,6-dimethylphenol), 2,2'-methylenebis(4-methyl-6-cyclohexylphenol), 4,4'-thiobis(2-methyl-6-tert-butylphenol), 4,4'-thiobis(3-methyl-6-tert-butylphenol), 2,2'-thiobis(4-methyl-6-tertbutylphenol), bis(3-methyl-4-hydroxy-5-tert-butylbenzyl) sulfide, bis(3,5-di-tert-butyl-4-hydroxybenzyl) sulfide, and thiodiethylenebis[3-(3,5-di-tert-butyl-4-hydroxyphenyl) propionate].

Examples of the amine-based antioxidant include: dialkyldiphenylamines, such as 4,4'-dibutyldiphenylamine and 4,4'-dioctyldiphenylamine; phenyl-α-naphthylamines, such as an alkylphenyl-α-naphthylamine and phenyl-α-naphthylamine; and N,N'-diphenyl-p-phenylenediamine.

The refrigerator oil may contain one kind of the antioxidants alone, or may contain two or more kinds thereof in combination.

When the refrigerator oil contains the antioxidant, the content of the antioxidant is preferably 0.1 mass% or more, more preferably 0.2 mass% or more, still more preferably 0.3 mass% or more with respect to the total amount (100 mass%) of the refrigerator oil from the following viewpoint: an increase in acid value of the refrigerator oil to be obtained is suppressed, and hence the oxidation stability thereof at high temperatures is more easily improved. In addition, the content is preferably 5 mass% or less, more preferably 3 mass% or less, still more preferably 1 mass% or less from the viewpoint of facilitating the exhibition of an effect commensurate with the content.

Examples of the oiliness improver include: aliphatic saturated or unsaturated monocarboxylic acids, such as stearic acid and oleic acid; polymerized fatty acids, such as a dimer acid and a hydrogenated dimer acid; hydroxy fatty acids, such as ricinoleic acid and 12-hydroxystearic acid; aliphatic saturated and unsaturated monoalcohols, such as lauryl alcohol and oleyl alcohol; aliphatic saturated or unsaturated monoamines, such as stearylamine and oleylamine; aliphatic saturated or unsaturated monocarboxylic acid amides, such as lauric acid amide and oleic acid amide; and partial esters of polyhydric alcohols, such as glycerin and sorbitol, and aliphatic saturated or unsaturated monocarboxylic acids.

The refrigerator oil may contain one kind of the oiliness improvers alone, or may contain two or more kinds thereof in combination.

When the refrigerator oil contains the oiliness improver, the content of the oiliness improver is preferably 0.01 mass% or more, more preferably 0.05 mass% or more, still more preferably 0.1 mass% or more with respect to the total amount (100 mass%) of the refrigerator oil, and is preferably 10 mass% or less, more preferably 5 mass% or less, still more preferably 2 mass% or less.

An example of the extreme-pressure agent is a phosphorus-based extreme-pressure agent. Examples of the phosphorus-based extreme-pressure agent include a phosphoric acid ester, a phosphorous acid ester, an acidic phosphoric acid ester, an acidic phosphorous acid ester, and amine salts thereof.

Examples of the phosphoric acid ester include a triaryl phosphate, a trialkyl phosphate, a monoalkyldiaryl phosphate, a dialkylmonoaryl phosphate, and a trialkenyl phosphate. The term "aryl" with regard to the extreme-pressure agent is not limited to a functional group formed only of an aromatic ring, and is a concept encompassing an alkylaryl and an arylalkyl.

Examples of the phosphoric acid ester include: triaryl phosphates, such as triphenyl phosphate, tricresyl phosphate, benzyl diphenyl phosphate, cresyl diphenyl phosphate, dicresyl phenyl phosphate, propylphenyl diphenyl phosphate, dipropylphenyl phenyl phosphate, ethylphenyl diphenyl phosphate, diethylphenyl phenyl phosphate, triethyl phenyl phosphate, tripropyl phenyl phosphate, butylphenyl diphenyl phosphate, dibutylphenyl phenyl phosphate, and tributyl phenyl phosphate; alkyl phosphates, such as tributyl phosphate, ethyl dibutyl phosphate, trihexyl phosphate, tri(2-ethylhexyl) phosphate, tridecyl phosphate, trilauryl phosphate, trimyristyl phosphate, tripalmityl phosphate, and tristearyl phosphate; and ethyl diphenyl phosphate and trioleyl phosphate.

Examples of the acidic phosphoric acid ester include various alkyl acid phosphates and dialkyl acid phosphates.

Examples of the phosphorous acid ester include various trialkyl phosphites, triaryl phosphites, monoalkyldiaryl phosphites, dialkylmonoaryl phosphites, and trialkenyl phosphites.

Examples of the acidic phosphorous acid ester include various dialkyl hydrogen phosphites, dialkenyl hydrogen phosphites, and diaryl hydrogen phosphites.

In addition, the phosphorus-based extreme-pressure agent may be, for example, a phosphoric acid ester having a sulfur atom such as trithiophenyl phosphate. An example of the amine salt is an amine salt of an acidic phosphoric acid ester or an acidic phosphorous acid ester. An amine for forming the amine salt may be a primary, secondary, or tertiary amine.

The refrigerator oil may contain one kind of the extreme-pressure agents alone, or may contain two or more kinds thereof in combination.

When the refrigerator oil contains the extreme-pressure agent, the content of the extreme-pressure agent is preferably 0.1 mass% or more, more preferably 0.3 mass% or more, still more preferably 0.5 mass% or more with respect to the total amount (100 mass%) of the refrigerator oil, and is preferably 5 mass% or less, more preferably 3 mass% or less, still more preferably 2 mass% or less.

An example of the acid scavenger is an epoxy compound. Examples of the epoxy compound include a glycidyl ether compound, cyclohexene oxide, an α-olefin oxide, and epoxidized soybean oil. Among them, a glycidyl ether compound is preferred.

Examples of the glycidyl ether compound include: an aliphatic monoalcohol having preferably 3 or more and 30 or less carbon atoms, more preferably 4 or more and 24 or less carbon atoms, still more preferably 6 or more and 16 or less carbon atoms; an aliphatic polyhydric alcohol having preferably 3 or more and 30 or less carbon atoms, more preferably 4 or more and 24 or less carbon atoms, still more preferably 6 or more and 16 or less carbon atoms; and a glycidyl ether derived from an aromatic compound containing 1 or more hydroxy groups. The aliphatic monoalcohol or the aliphatic polyhydric alcohol may be linear, branched, or cyclic, and may be saturated or unsaturated.

In the case of the aliphatic polyhydric alcohol or in the case of an aromatic compound containing 2 or more hydroxy groups, all the hydroxy groups are preferably turned into glycidyl ethers from the viewpoints of the stability of the refrigerator oil and the suppression of an increase in hydroxyl value thereof.

Examples of the glycidyl ether compound include phenyl glycidyl ether, an alkyl glycidyl ether, and an alkylene glycol glycidyl ether. The glycidyl ether compound is, for example, a glycidyl ether derived from a linear, branched, or cyclic, saturated aliphatic monoalcohol having 6 or more and 16 or less carbon atoms (that is, an alkyl glycidyl ether having an alkyl group having 6 or more and 16 or less carbon atoms), and examples thereof include 2-ethylhexyl glycidyl ether, isononyl glycidyl ether, decyl glycidyl ether, lauryl glycidyl ether, and myristyl glycidyl ether.

The refrigerator oil may contain one kind of the acid scavengers alone, or may contain two or more kinds thereof in combination.

When the refrigerator oil contains the acid scavenger, the content of the acid scavenger is preferably 0.1 mass% or more, more preferably 0.4 mass% or more, still more preferably 0.8 mass% or more with respect to the total amount (100 mass%) of the refrigerator oil from the viewpoint that the oxidation stability thereof at high temperatures is more easily improved. In addition, the content is preferably 10 mass% or less, more preferably 5 mass% or less, still more preferably 3 mass% or less, still further more preferably 2 mass% or less from the viewpoint of facilitating the exhibition of an effect commensurate with the content.

Examples of the oxygen scavenger include: sulfur-containing aromatic compounds, such as 4,4'-thiobis(3-methyl-6-tert-butylphenol), diphenyl sulfide, dioctyldiphenyl sulfide, a dialkyl diphenylene sulfide, benzothiophene, dibenzothiophene, phenothiazine, benzothiapyran, thiapyran, thianthrene, dibenzothiapyran, and diphenylene disulfide; aliphatic unsaturated compounds, such as various olefins, dienes, and trienes; and terpenes each having a double bond.

The refrigerator oil may contain one kind of the oxygen scavengers alone, or may contain two or more kinds thereof in combination.

When the refrigerator oil contains the oxygen scavenger, the content of the oxygen scavenger is preferably 0.01 mass% or more, more preferably 0.05 mass% or more, still more preferably 0.1 mass% or more with respect to the total amount (100 mass%) of the refrigerator oil, and is preferably 10 mass% or less, more preferably 5 mass% or less, still more preferably 3 mass% or less, still further more preferably 2 mass% or less.

Examples of the metal deactivator may include copper deactivators such as an *N-*[*N,N'-*dialkyl (alkyl group having 3 or more and 12 or less carbon atoms) aminomethyl]triazole.

Examples of the rust inhibitor may include a metal sulfonate, an aliphatic amine, an organic phosphorous acid ester, an organic phosphoric acid ester, an organic sulfonic acid metal salt, an organic phosphoric acid metal salt, an alkenyl succinic acid ester, and a polyhydric alcohol ester.

Examples of the antifoaming agent include silicone oils such as a dimethylpolysiloxane, and polymethacrylates.

The refrigerator oil may contain one kind of the metal deactivator, the rust inhibitor, and the antifoaming agent alone, or may contain two or more kinds thereof in combination.

When the refrigerator oil contains the metal deactivator, the rust inhibitor, or the antifoaming agent, the content of each of the additives is preferably 0.01 mass% or more, more preferably 0.05 mass% or more, still more preferably 0.1 mass% or more with respect to the total amount (100 mass%) of the refrigerator oil, and is preferably 10 mass% or less, more preferably 5 mass% or less, still more preferably 3 mass% or less, still further more preferably 2 mass% or less.

### (Mixing Ratio between Refrigerator Oil and Mixed Refrigerant)

The content ratio (refrigerator oil/mixed refrigerant) of the refrigerator oil to the mixed refrigerant in the composition for a refrigerator is preferably 1/99 or more and 99/1 or less, more preferably 1/99 or more and 90/10 or less, still more preferably 5/95 or more and 88/12 or less, still further more preferably 10/95 or more and 60/40 or less in terms of mass ratio. When the mass ratio of the refrigerator oil to the mixed refrigerant is set within the ranges, lubricity and a suitable refrigerating capacity in a refrigerator can be obtained.

In addition, the total content of the mixed refrigerant and the refrigerator oil in the composition for a refrigerator is preferably 90 mass% or more and 100 mass% or less, more preferably 95 mass% or more and 100 mass% or less, still more preferably 98 mass% or more and 100 mass% or less, still further more preferably 100 mass% with respect to the total amount (100 mass%) of the composition for a refrigerator.

### [Refrigerator Oil]

A refrigerator oil according to an embodiment of the present invention is used together with the mixed refrigerant in the above-mentioned composition for a refrigerator, and details thereof are the same as those described above.

### [Method of producing Composition for Refrigerator]

The composition for a refrigerator is obtained by mixing the mixed refrigerant and the refrigerator oil. That is, a method of producing the composition for a refrigerator according to one aspect of the present invention is a method of producing the composition for a refrigerator, including a step of mixing a mixed refrigerant and a refrigerator oil containing a base oil, wherein the mixed refrigerant contains a hydrofluorocarbon compound and carbon dioxide, wherein a content of the hydrofluorocarbon compound is less than 25 mass% with respect to a total amount of the mixed refrigerant, and wherein the base oil contains one or more kinds selected from the group consisting of: a polyvinyl ether (PVE); and a polyalkylene glycol (PAG).

Detailed descriptions of the mixed refrigerant and the refrigerator oil are omitted because the descriptions are the same as those described above. In addition, the suitable range of the total content of the mixed refrigerant and the refrigerator oil in the composition for a refrigerator is as described above.

### [Refrigerator]

The composition for a refrigerator is used by being loaded into a refrigerator.

The refrigerator is preferably a compression-type refrigerator using the mixed refrigerant, more preferably a refrigerator including a refrigeration cycle, which includes a compressor, a condenser, an expansion mechanism (e.g., an expansion valve), and an evaporator, or a refrigeration cycle, which includes the compressor, the condenser, the expansion mechanism, a dryer, and the evaporator.

The composition for a refrigerator is used for lubricating a sliding portion arranged in, for example, a compressor. The sliding portion is not particularly limited.

Examples of equipment including the above-mentioned refrigerator include: car air conditioners, such as an open car air conditioner and an electric car air conditioner; air conditioners, such as a room air conditioner and a packaged air conditioner; refrigeration systems, such as a gas heat pump (GHP), a freezer, a cold storage, a vending machine, and a showcase; and a hot water system and a heating system, such as a water heater and floor heating. The refrigerator is preferably applied to an air conditioner, and is more preferably applied to a room air conditioner or a packaged air conditioner.

In addition, when the composition for a refrigerator is used by being loaded into the refrigerator, the usage amount ratio (refrigerator oil/mixed refrigerant) of the refrigerator oil to the mixed refrigerant is preferably 1/99 or more and 99/1 or less, more preferably 1/99 or more and 90/10 or less, still more preferably 5/95 or more and 88/12 or less, still further more preferably 10/95 or more and 60/40 or less in terms of mass ratio.

The usage amount ratio is a ratio between the usage amounts of the mixed refrigerant and the refrigerator oil to be introduced into an apparatus, and whether the mixed refrigerant and the refrigerator oil are in a completely or partially compatible state does not matter. The ratio is merely based on the respective usage amounts when the respective components are introduced into a system. That is, the ratio does not refer to a ratio between the amounts of the respective components in the composition for a refrigerator.

### Examples

The present invention is more specifically described below by way of Examples, but the present invention is by no means limited by these examples.

The respective physical properties of the respective components and the respective compositions for refrigerators were determined in accordance with the following procedures.

### [40°C Kinematic Viscosity]

The 40°C kinematic viscosity of a base oil was measured in conformity with JIS K2283:2000.

### [Acid Value]

The acid value of the base oil (A) was measured in conformity with JIS K0070:1992 by a neutralization titration method.

### [Number-average Molecular Weight (Mn)]

The number-average molecular weight (Mn) of the base oil (A) was measured with a gel permeation chromatography (GPC) apparatus.

An apparatus having sequentially connected thereto two pieces of "TSKgel SuperMultipore HZ-M" manufactured by Tosoh Corporation as columns was used as the GPC apparatus, and the measurement was performed by using tetrahydrofuran as an eluent and a refractive index detector (RI detector) as a detector, followed by the determination of the number-average molecular weight (Mn) through use of polystyrene as a standard sample.

### <Method of evaluating Heat Stability>

Each of compositions for refrigerators (refrigerator oil composition/refrigerant=30 g/30 g, moisture content in the composition for a refrigerator: 500 ppm by mass, air content: 25 mL) prepared in Examples 1 to 6 and Comparative Examples 1 to 9, and metal catalysts formed of iron, copper, and aluminum were loaded into an autoclave tube, and the mixture was held under the condition of a temperature of 175°C for 14 days. After that, an oil appearance, the presence or absence of a sludge, and the presence or absence of a change in color of each of the catalysts were visually observed.

The oil appearance was evaluated by an ASTM color. An oil appearance judged to have an ASTM color value of 1.0 or less (L1.0) was judged to be satisfactory, and an oil appearance judged to have an ASTM color value of more than 1.0 (e.g., L1.5 or L2.0) was judged to be unsatisfactory.

In addition, after the heat stability test, the acid values of the refrigerator oil compositions were each evaluated by a method described below.

### (Evaluation of Acid Value of Refrigerator Oil Composition)

The acid values were each measured in conformity with JIS K2501:2003 by an indicator photometric titration method (see Appendix 1 in the JIS standard).

The physical properties of the base oils incorporated into the compositions for refrigerators evaluated in the respective Examples and the respective Comparative Examples are shown in Table 1 below.

### [Table 1]

**Table 1**

| Base oil | | 40°C Kinematic viscosity (mm²/s) |
|---|---|---|
| PVE | Polyethyl vinyl ether/polyisobutyl vinyl ether copolymer (mass ratio: 9/1) | 66.6 |
| PAG | Polyoxypropylene glycol dimethyl ether | 108.1 |
| POE | Ester of pentaerythritol, and octanoic acid and nonanoic acid (octanoic acid/nonanoic acid=1/1 (molar ratio)) | 66.2 |

### [Examples 1 to 6 and Comparative Examples 1 to 9]

Refrigerator oils each containing 100 mass% of a base oil shown in Table 1 above and mixed refrigerants whose compositions were shown in Table 2 below were mixed with each other at mixing ratios shown in Table 2 below to prepare the respective compositions for refrigerators, and the above-mentioned heat stability of each of the compositions was evaluated. The obtained results are shown in Table 2 below.

### [Table 2]

**Table 2**

| | Refrigerator oil | Refrigerant mixing ratio mass%] | | Hue | Acid value (mgKOH/g) | Change in color of catalyst | | | Sludge |
|---|---|---|---|---|---|---|---|---|---|
| | | CO2 | R1234yf | | | Fe | Cu | Al | |
| Example 1 | | 95 | 5 | L0.5 | 0.09 | Absent | Absent | Absent | Absent |
| Example 2 | | 90 | 10 | L1.0 | 0.16 | Absent | Absent | Absent | Absent |
| Example 3 | PVE | 85 | 15 | L1.0 | 0.35 | Absent | Absent | Absent | Absent |
| Comparative Example 1 | | 75 | 25 | L1.5 | 1.07 | Absent | Absent | Absent | Absent |
| Comparative Example 2 | | 50 | 50 | L1.5 | 1.74 | Absent | Present | Absent | Absent |
| Comparative Example 3 | | 95 | 5 | L1.0 | 0.05 | Present | Present | Absent | Absent |
| Comparative Example 4 | | 90 | 10 | L1.5 | 0.05 | Present | Present | Absent | Absent |
| Comparative Example 5 | POE | 85 | 15 | L1.5 | 0.08 | Present | Present | Absent | Absent |
| Comparative Example 6 | | 75 | 25 | L2.0 | 0.18 | Present | Present | Absent | Absent |
| Comparative Example 7 | | 50 | 50 | L2.5 | 1.29 | Present | Present | Absent | Absent |
| Example 4 | | 95 | 5 | L0.5 | 0.02 | Absent | Absent | Absent | Absent |
| Example 5 | | 90 | 10 | L0.5 | 0.04 | Absent | Absent | Absent | Absent |
| Example 6 | PAG | 85 | 15 | L0.5 | 0.06 | Absent | Absent | Absent | Absent |
| Comparative Example 8 | | 75 | 25 | L1.0 | 0.52 | Absent | Absent | Absent | Absent |
| Comparative Example 9 | | 50 | 50 | L1.0 | 0.83 | Absent | Absent | Absent | Absent |

As shown in Table 2, it was recognized that each of the compositions for refrigerators of Examples 1 to 6 had high heat stability despite the fact that the composition included carbon dioxide, and hence had a low global warming potential.

In contrast, as shown in Table 2, in each of the compositions for refrigerators of Comparative Examples 1, 2, 8, and 9, the content of the hydrofluorocarbon compound was 25 mass% or more. Accordingly, the hue after the heat stability test was unsatisfactory in some cases, and the acid value was a larger value.

Meanwhile, in each of the compositions for refrigerators of Comparative Examples 3 to 7 each using the polyol ether as the base oil of its refrigerator oil, the hue after the heat stability test was unsatisfactory, and changes in colors of the iron catalyst and the copper catalyst were observed.

### Industrial Applicability

The composition for a refrigerator according to one aspect of the present invention is a mixture of the mixed refrigerant containing carbon dioxide and being a refrigerant having a low global warming potential, and the refrigerator oil, and is excellent in heat stability. Thus, the composition is suitable for a refrigerator application. For example, the composition may be more suitably used as a composition for a refrigerator to be used in a closed compression-type refrigerating apparatus using a mixed refrigerant. In addition, the composition for a refrigerator includes the mixed refrigerant, and hence may also be suitably used in, for example, car air conditioners, such as an open car air conditioner and an electric car air conditioner, air conditioners, such as a room air conditioner and a packaged air conditioner, refrigeration systems, such as a gas heat pump (GHP), a freezer, a cold storage, a vending machine, and a showcase, and a hot water system and a heating system, such as a water heater and floor heating.

## Claims

1. A composition for a refrigerator, comprising:
a mixed refrigerant; and
a refrigerator oil containing a base oil,
wherein the mixed refrigerant contains a hydrofluorocarbon compound and carbon dioxide,
wherein a content of the hydrofluorocarbon compound is less than 25 mass% with respect to a total amount of the mixed refrigerant, and
wherein the base oil contains one or more kinds selected from the group consisting of: a polyvinyl ether; and a polyalkylene glycol.

2. The composition for a refrigerator according to claim 1, wherein a content of the carbon dioxide is 50 mass% or more and 97 mass% or less with respect to the total amount of the mixed refrigerant.

3. The composition for a refrigerator according to claim 1 or 2, wherein the content of the hydrofluorocarbon compound is 3 mass% or more and less than 25 mass% with respect to the total amount of the mixed refrigerant.

4. The composition for a refrigerator according to any one of claims 1 to 3, wherein the content of the hydrofluorocarbon compound is 3 mass% or more and 20 mass% or less with respect to the total amount of the mixed refrigerant.

5. The composition for a refrigerator according to any one of claims 1 to 4, wherein the hydrofluorocarbon compound contains 70 mass% or more and 100 mass% or less of an unsaturated hydrofluorocarbon compound.

6. The composition for a refrigerator according to any one of claims 1 to 5, wherein a content of the one or more kinds selected from the group consisting of: the polyvinyl ether; and the polyalkylene glycol is 90 mass% or more and 100 mass% or less with respect to a total amount of the base oil.

7. The composition for a refrigerator according to any one of claims 1 to 6, wherein a content of the polyalkylene glycol is 90 mass% or more and 100 mass% or less with respect to a total amount of the base oil.

8. The composition for a refrigerator according to any one of claims 1 to 7, wherein a total content of the mixed refrigerant and the refrigerator oil in the composition for a refrigerator is 90 mass% or more and 100 mass% or less.

9. A refrigerator oil to be used with a mixed refrigerant, which contains a hydrofluorocarbon compound and carbon dioxide, and in which a content of the hydrofluorocarbon compound is less than 25 mass%, the refrigerator oil comprising a base oil,
wherein the base oil contains one or more kinds selected from the group consisting of: a polyvinyl ether; and a polyalkylene glycol.

10. A method of producing the composition for a refrigerator of any one of claims 1 to 8, comprising a step of mixing a mixed refrigerant and a refrigerator oil containing a base oil,
wherein the mixed refrigerant contains a hydrofluorocarbon compound and carbon dioxide,
wherein a content of the hydrofluorocarbon compound is less than 25 mass% with respect to a total amount of the mixed refrigerant, and
wherein the base oil contains one or more kinds selected from the group consisting of: a polyvinyl ether; and a polyalkylene glycol.
